# EUROPÄISCHE PATENTANMELDUNG

(11) **EP 2 166 267 A2**
(43) Veröffentlichungstag der Anmeldung: **24.03.2010**
(21) Anmeldenummer: 09010478.7
(22) Anmeldetag: 14.08.2009
(51) Int. Cl.: F16L 37/084

(54) **Steckkupplung**

(30) Priorität: 19.09.2008 DE 102008048040
(71) Anmelder: NORMA Germany GmbH, 63477 Maintal (DE)
(72) Erfinder: Kertesz, Janos, 65843 Sulzbach (DE); Wachter, Gerhard, 63654 Büdingen (DE)
(74) Vertreter: Knoblauch, Andreas

(57) **Zusammenfassung**

Es wird eine Steckkupplung (1) angegeben mit einem ersten Element (2), das eine Einstecköffnung (3) aufweist, einem zweiten Element (4), das in die Einstecköffnung (39 einsteckbar ist, einer Halteeinrichtung (6), die mindestens eines dieser beiden Elemente (2, 4) umgibt, und einer Dichtung (10).

Man möchte eine gute Dichtigkeit bei geringen Zusammensteckkräften erreichen können.

Hierzu ist es vorgesehen, dass die Dichtung (10) innen an der Halteeinrichtung (6) angeordnet ist, das erste Element (2) und das zweite Element (4) jeweils einander zugewandte Stirnseitenabschnitte (18, 19) aufweisen und die Dichtung (10) zwischen den Stirnseitenabschnitten (18, 19) angeordnet ist.

## Beschreibung

Die Erfindung betrifft eine Steckkupplung mit einem ersten Element, das eine Einstecköffnung aufweist, einem zweiten Element, das in die Einstecköffnung einsteckbar ist, einer Halteeinrichtung, die mindestens eines dieser beiden Elemente umgibt und mindestens einer Dichtung.

Eine derartige Steckkupplung ist beispielsweise aus DE 37 27 858 C2 bekannt. Mit einer derartigen Steckkupplung lassen sich zwei Schlauch- oder Rohrleitungen miteinander verbinden, wobei das erste Element am Ende einer ersten Leitung und das zweite Element am Ende einer zweiten Leitung angeordnet ist. Die Verbindung wird dann einfach dadurch hergestellt, dass das zweite Element in das erste Element eingesteckt wird.

Die Dichtung soll dafür sorgen, dass das in der zusammengesetzten Leitung strömende Fluid nicht nach außen gelangen kann. Insbesondere dann, wenn das Fluid unter einem höheren Druck steht, muss man also die Dichtung entsprechend dimensionieren. Im bekannten Fall ist die Dichtung durch zwei Rundschnur-Dichtringe gebildet, die in Nuten auf dem Umfang des zweiten Elements angeordnet sind. Dies führt dazu, dass man beim Zusammenstecken der beiden Elemente eine relativ hohe Zusammensteckkraft aufbringen muss. Diese Zusammensteckkraft dient dann hauptsächlich dazu, die Reibungskraft zwischen der Dichtung und der Innenseite des ersten Elements zu überwinden.

Der Erfindung liegt die Aufgabe zugrunde, eine gute Dichtigkeit bei geringen Zusammensteckkräften zu erzielen.

Diese Aufgabe wird bei einer Steckkupplung der eingangs genannten Art dadurch gelöst, dass die Dichtung innen an der Halteeinrichtung angeordnet ist, das erste Element und das zweite Element jeweils einander zugewandte Stirnseitenabschnitte aufweisen und die Dichtung zwischen den Stirnseitenabschnitten angeordnet ist.

Bei dieser Ausgestaltung wird die Dichtigkeit durch die Dichtung dadurch erzeugt, dass die Dichtung mit den beiden Stirnseitenabschnitten zusammenwirkt. Dementsprechend kann man die Reibungskräfte, die beim Zusammenstecken der beiden Elemente auftreten, klein halten. Es ist nämlich nicht erforderlich, dass die Dichtung mit einer entsprechenden Vorspannung in radialer Richtung zwischen den beiden Elementen angeordnet ist. Dadurch, dass die Dichtung innen am Halteelement angeordnet ist, ergibt sich der zusätzliche Vorteil, dass die Dichtung dann, wenn die beiden Elemente nicht zusammengesteckt sind, einen gewissen Schutz erfährt. Eine Beschädigung durch eine versehentliche falsche Beaufschlagung von außen ist zwar nicht ausgeschlossen, aufgrund der Anordnung der Dichtung in Inneren des Halteelements jedoch relativ unwahrscheinlich.

Vorzugsweise weist die Dichtung im Schnitt zwei Schenkel auf, von denen jeder an einem Stirnseitenabschnitt anliegt. Die beiden Schenkel haben an ihrem freien Ende dementsprechend einen gewissen Abstand in Aufsteckrichtung zueinander. Sie bilden also einen Hohlraum, in den das Fluid eindringen kann, wenn das zweite Element in das zweite Element eingesteckt ist. Der Druck des Fluids führt dann dazu, dass die Schenkel gegen die ihnen zugeordneten Stirnseiten gedrückt werden. Je größer der Druck des Fluids ist, desto stärker ist auch der Druck, mit dem die Schenkel jeweils gegen ihre Stirnseitenabschnitte gedrückt werden, so dass die Dichtigkeit mit dem zunehmenden Druck im Inneren der Elemente steigt. Versuche haben ergeben, dass eine derartige Dichtung durchaus bis zu einem Druck von 36 bar dicht ist. Darüber hinaus haben die Schenkel den Vorteil, dass die Kräfte, die zum Zusammenstecken erforderlich sind, klein gehalten werden können und zwar auch dann, wenn die Stirnseitenabschnitte zur Anlage an die Dichtung kommen und diese gegebenenfalls etwas verformen müssen. Ein Schenkel, der nur an einem Ende gehalten ist, kann relativ leicht verformt werden.

Vorzugsweise bildet der Schenkel, der am Stirnseitenabschnitt des ersten Elements anliegt, mit einer Umfangsfläche des zweiten Elements einen Leckagepfad. Wenn man einen Leckagepfad vorsieht, dann ist sichergestellt, dass Fluid aus dem Inneren der beiden Elemente in den Raum zwischen den Schenkeln vordringen kann, um die Schenkel gegen die entsprechenden Stirnseitenabschnitte zu drücken. Darüber hinaus kann man dann, wenn man einen Leckagepfad vorsieht, die Reibungskräfte zwischen der Dichtung und dem zweiten Element klein halten.

Vorzugsweise bilden beide Schenkel mit der Umfangsfläche des zweiten Elements einen Leckagepfad. Dies hat den Vorteil, dass man die Dichtung in Axialrichtung symmetrisch ausbilden kann, was die Fertigung erleichtert. Darüber hinaus spielt dann die Einsteckrichtung der beiden Elemente keine größere Rolle mehr.

Vorzugsweise halten die Schenkel mit ihren radialen Innenseiten einen vorbestimmten Abstand zur Umfangsfläche ein. Man sieht also bewusst vor, dass die Dichtung die Umfangsfläche des zweiten Elements nicht berührt. Dadurch vermeidet man, dass beim Einstecken Reibungskräfte zwischen der Dichtung und dem zweiten Element entstehen. Damit werden zum Einen die Zusammensteckkräfte klein gehalten. Zum Anderen ist auch die Gefahr gering, dass die Dichtung beim Einstecken des zweiten Elements in das erste Element beschädigt wird. Darüber hinaus wird aufgrund des Abstands das Risiko klein gehalten, dass die Dichtung an der Umfangsfläche des zweiten Elements festklebt, was eine Demontage erschweren würde.

Auch ist von Vorteil, wenn mindestens ein Schenkel eine seinem Stirnseitenabschnitt zugewandte Außenseite mit einer Form aufweist, die der Form des Stirnseitenabschnitts entspricht. Dabei muss es sich nicht um eine identische Übereinstimmung handeln. Eine Annäherung der Form des Stirnseitenabschnitts und der Form des Schenkels reicht aus. Es wird damit sichergestellt, dass der Schenkel nicht mehr größer verformt werden muss, um sich flächig an seinen Stirnseitenabschnitt anzulegen. Damit erreicht man auch bei geringen Drücken eine ausreichende Dichtigkeit.

Vorzugsweise weist mindestens ein Schenkel eine im Wesentlichen gleich bleibende Dicke auf. Damit ist dieser Schenkel durch den Druck, der in dem Raum zwischen den beiden Schenkeln herrscht, über seine Länge im Wesentlichen gleichmäßig verformbar. Dementsprechend kann man dafür sorgen, dass er sich über seine Länge auch gleichmäßig an den entsprechenden Stirnseitenabschnitt anlegt. Je größer diese Länge ist, also die Dichtlänge, desto besser ist die Dichtigkeit.

Vorzugsweise gehen beide Schenkel von einem gemeinsamen Basisbereich aus. Es ergibt sich also sozusagen für beide Schenkel ein gemeinsamer Gelenkpunkt, um den die Schenkel verschwenkt werden können. Dies ist dann von Vorteil, wenn man beim Zusammenstecken der beiden Elemente ein kleines Spiel zulassen möchte.

Vorzugsweise ist mindestens ein Schenkel gewölbt. Dementsprechend ist auch der diesem Schenkel zugeordnete Stirnseitenabschnitt gewölbt. Die Dichtung weist hier also die Form eines Abschnitts eines Torus auf. Dementsprechend kann man durch eine Druckbeaufschlagung in dem Raum zwischen den beiden Schenkeln dafür sorgen, dass sich eine flächige Anlage der Außenseite des Schenkels an den ihm zugeordneten Stirnseitenabschnitt ergibt. Alternativ dazu kann man auch die beiden Schenkel V-förmig zueinander anordnen oder nach Art eines Trapezes.

Vorzugsweise ist die Halteeinrichtung vom ersten Element und vom zweiten Element getrennt ausgebildet. Die Halteeinrichtung bildet also ein drittes Element. Die Halteeinrichtung kann beispielsweise mit Mitteln versehen sein, die mit den beiden Elementen verrasten, um ein axiales Zusammenhalten der beiden Elemente zu gewährleisten. Wenn man die Halteeinrichtung als getrenntes Element ausbildet, dann hat man weitgehende Möglichkeiten, auch die Dichtung unabhängig von jedem der beiden Elemente zu fertigen.

Die Dichtung ist vorzugsweise stoffflüssig mit der Halteeinrichtung verbunden. Wenn sie stoffflüssig verbunden ist, dann kann sie angeklebt, eingeschmolzen oder eingeschweißt sein. Sie kann auch gemeinsam mit dem Halteelemente gegossen worden sein. In diesem Fall ist sie mit dem Halteelement einstückig ausgebildet.

Alternativ dazu kann die Dichtung auch formschlüssig mit der Halteeinrichtung verbunden sein. In diesem Fall kann die Halteeinrichtung beispielsweise eine Nut aufweisen, in die die Dichtung eingelegt oder eingesetzt ist.

Bevorzugterweise weist die Dichtung einen Dichtungsfuß auf, der das erste Element und das zweite Element umgibt. Der Dichtungsfuß hat zwei Aufgaben. Er dient zum Einen dazu, die Dichtung am Halteelement festzuhalten. Zum Anderen bildet er eine Führung für die beiden Elemente während des Einsteckens.

Vorzugsweise ist zwischen der Dichtung und dem Dichtungsfuß ein Steg angeordnet, der einen Abstand zu mindestens einem Stirnseitenabschnitt aufweist. Damit ist sichergestellt, dass sich die Schenkel der Dichtung an den jeweiligen Stirnseitenabschnitt anlegen können.

Die Erfindung wird im Folgenden anhand eines bevorzugten Ausführungsbeispiels in Verbindung mit der Zeichnung beschrieben. Hierin zeigen:
- Fig. 1: eine Schnittansicht durch eine Steckkupplung und
- Fig. 2: eine Detailansicht II nach Fig. 1.

Eine Steckkupplung 1 weist ein erstes Element 2 mit einer Einstecköffnung 3 und ein zweites Element 4 mit einem Stutzen 5 auf, der in die Einstecköffnung 3 eingesteckt ist. Eine Halteeinrichtung 6 umgibt das erste Element 2 und das zweite Element 4. Die Halteeinrichtung 6 weist nicht näher dargestellte Mittel auf, mit denen sie das erste Element 2 und das zweite Element 4 in der dargestellten Position axial zusammenhält. Wenn im Folgenden von Richtungsangaben, wie axial oder radial, die Rede ist, dann beziehen sich diese Richtungsangaben auf eine Achse 7.

Die Halteeinrichtung weist einen ersten Anschlag 8 auf, bis zu dem das erste Element 2 in die Halteeinrichtung 6 hineinbewegt werden kann und einen zweiten Anschlag 9, bis zu dem das zweite Element 4 in die Halteeinrichtung 6 hineinbewegt werden kann.

Eine Dichtung 10 ist radial innen am Halteelement 6 angeordnet. Die Dichtung 10 weist einen Dichtungsfuß 11 auf, der mit der Halteeinrichtung 6 verbunden ist. Der Dichtungsfuß 11 kann mit dem Halteelement 6 verklebt oder verschweißt sein. Im Grunde ist hier jede stoffflüssige Verbindung möglich. Man kann die Dichtung 10 mit dem Dichtungsfuß 11 auch einstückig mit der Halteeinrichtung 6 ausbilden. Beispielsweise kann man für die Halteeinrichtung 6 und die Dichtung 10 einen gleichen Elastomer verwenden und die beiden Elemente gemeinsam in einer Spritzgussform gießen, wobei man bei der Dichtung 10 ein Elastomer ohne Härter verwendet.

Alternativ hierzu kann die Dichtung 10 mit ihrem Dichtungsfuß 11 auch formschlüssig mit der Halteeinrichtung 6 verbunden sein. In diesem Fall wäre der Dichtungsfuß 11 in axialer Richtung etwas kürzer ausgebildet und die Halteeinrichtung weist dann eine Nut auf, in der der Dichtungsfuß 11 angeordnet ist.

Die Dichtung 10 ist mit dem Dichtungsfuß 11 über einen Steg 12 verbunden. Beide Elemente 2, 4 haben in axialer Richtung einen kleinen Abstand 13 zu dem Steg 12. Dieser Abstand 13 wird durch die beiden Anschläge 8, 9 definiert.

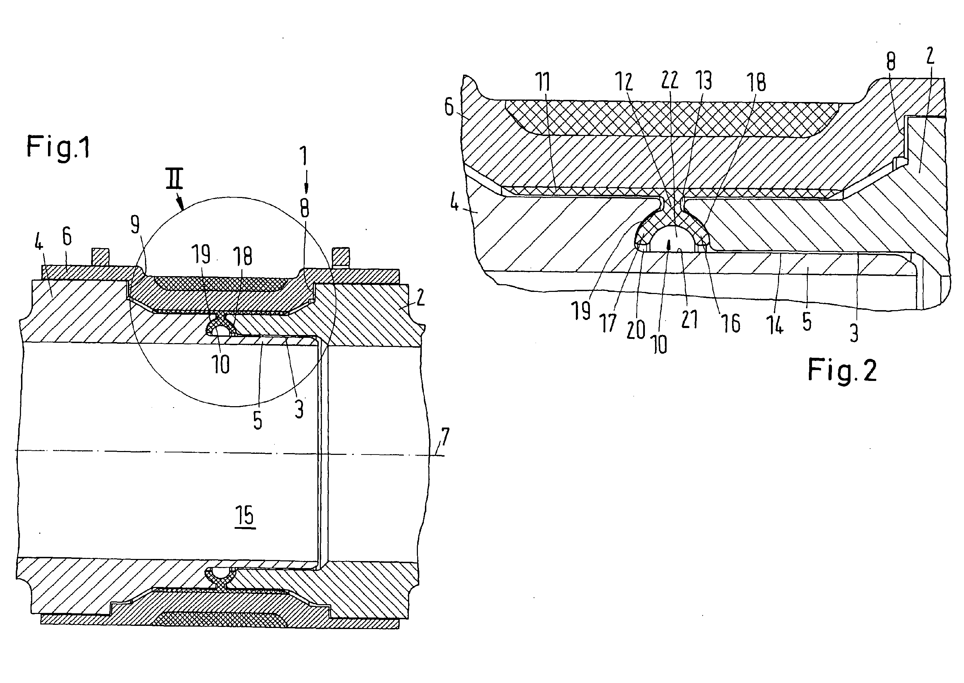

Wie insbesondere aus Fig. 2 zu erkennen ist, ist zwischen dem Stutzen 5 und der Einstecköffnung 3 ein Spalt 14 vorgesehen, durch den Fluid aus dem Inneren 15 des zweiten Elements 4 oder des ersten Elements 2 bis zur Dichtung 10 gelangen kann.

Die Dichtung 10 weist zwei Schenkel 16, 17 auf, die vom Steg 12 ausgehen. Der Steg 12 bildet also einen gemeinsamen Basisbereich für die beiden Schenkel 16, 17.

Das erste Element 2 weist einen ersten Stirnseitenabschnitt 18 auf. Das zweite Element 4 weist einen zweiten Stirnseitenabschnitt 19 auf. Die beiden Stirnseitenabschnitte 18, 19 liegen einander in axialer Richtung gegenüber. Die Dichtung 10 ist zwischen den beiden Stirnseitenabschnitten 18, 19 angeordnet. Wenn die beiden Elemente 2, 4 in die Halteeinrichtung 6 eingesetzt werden, dann liegen die beiden Schenkel 16, 17 mit einer geringen Vorspannung an den beiden Stirnseitenabschnitten 18, 19 an. Da die beiden Schenkel 18, 19 nur einseitig am Steg 12 befestigt sind, können sie etwas verformt werden, wobei zu ihrer Verformung keine größere Kraft erforderlich ist.

Die beiden Schenkel 16, 17 weisen einen Abstand 20 zur Umfangswand 21 des Stutzens 5 des zweiten Elements 4 auf. Dementsprechend liegt die Dichtung 10 mit ihren beiden Schenkeln 16, 17 nicht an der Umfangswand 21 des Stutzens 5 an. Dementsprechend entstehen beim Einschieben des zweiten Elements 4 in das Halteelement 6 oder in das erste Element 2 keinerlei Reibungskräfte gegenüber der Dichtung 10, die beim Zusammenstecken überwunden werden müssten. Die Zusammensteckkräfte bleiben daher klein.

Die beiden Schenkel 16, 17 umgrenzen gemeinsam mit dem zweiten Element 4, genauer gesagt dem Stutzen 5 des zweiten Elements 4, einen Hohlraum 22, in den Fluid durch den Spalt 14 vordringen kann. Der Abstand 20 bildet dabei einen bewusst ausgebildeten Leckagepfad, durch den das Fluid in den Hohlraum eindringen kann. Der Druck des Fluids im Hohlraum 22 führt dazu, dass die beiden Schenkel 16, 17 gegen ihre Stirnseitenabschnitte 18, 19 gedrückt werden. Je größer der Druck im Hohlraum 22 ist, desto größer sind auch die Kräfte, mit denen die beiden Schenkel 16, 17 gegen die Stirnseitenabschnitte 18, 19 gedrückt werden. Je größer diese Kräfte sind, desto besser ist die Dichtigkeit. Man hat festgestellt, dass eine derartige Dichtung bis zu einem Druck von 36 bar dicht ist. Der Abstand 20 ist hier übertrieben groß dargestellt. In der Regel reicht es aus, ihn kleiner als 1 mm zu machen, so dass sich eine möglichst große Dichtungslänge ergibt.

Die beiden Stirnseitenabschnitte 18, 19 weisen eine konkav ausgebildete Krümmung auf. Die Außenseiten der beiden Schenkel 16, 17 weisen eine entsprechend konvexe Krümmung auf. Die Krümmungen der Außenseiten der Schenkel 16, 17 und die Krümmungen der Stirnseitenabschnitte 18, 19 müssen sich dabei nicht exakt entsprechen. Eine gewisse Übereinstimmung sollte aber gegeben sein, um eine möglichst großflächige Anlage der Schenkel 16, 17 an die Stirnseitenabschnitte 18, 19 zu ermöglichen.

Die Schenkel 16, 17 haben eine etwa gleichbleibende Dicke. Dementsprechend werden sie durch den Druck im Hohlraum 22 auch weitgehend gleichmäßig an die Stirnseitenabschnitte 18, 19 gepresst.

Anstelle der gekrümmten Ausbildung kann auch eine gradlinige oder polygonartige Ausbildung der Schenkel 16 gewählt werden. Beispielsweise können die beiden Schenkel 16, 17 auch V-förmig zueinander angeordnet werden oder nach Art eines Trapezes. In jedem Fall sollte aber sichergestellt werden, dass die Schenkel 16, 17 bei einer Druckbeaufschlagung des Hohlraums 22 mit ausreichender Kraft gegen die Stirnseitenabschnitte 18, 19 gedrückt werden.

Dargestellt ist, dass die Halteeinrichtung 6 von den beiden Elementen 2, 4 getrennt ausgebildet ist. Sie kann jedoch auch mit einem der beiden Elemente 2, 4 fest verbunden sein. Allerdings ist in diesem Fall die Anordnung der Dichtung 10 etwas aufwändiger.

Die Dichtung 10 ist hier nur im Schnitt dargestellt. Es ist aber ohne Weiteres nachzuvollziehen, dass die Dichtung 10 im vorliegenden Ausführungsbeispiel als radial äußere Hälfte eines torusförmigen Körpers ausgebildet ist.

## Patentansprüche

1. Steckkupplung mit einem ersten Element, das eine Einstecköffnung aufweist, einem zweiten Element, das in die Einstecköffnung einsteckbar ist, einer Halteeinrichtung, die mindestens eines dieser beiden Elemente umgibt, und mindestens einer Dichtung, **dadurch gekennzeichnet, dass** die Dichtung (10) innen an der Halteeinrichtung (6) angeordnet ist, das erste Element (2) und das zweite Element (4) jeweils einander zugewandte Stirnseitenabschnitte (18, 19) aufweisen und die Dichtung (10) zwischen den Stirnseitenabschnitten (18, 19) angeordnet ist.

2. Steckkupplung nach Anspruch 1, **dadurch gekennzeichnet, dass** die Dichtung (10) im Schnitt zwei Schenkel (16, 17) aufweist, von denen jeder an einem Stirnseitenabschnitt (18, 19) anliegt.

3. Steckkupplung nach Anspruch 2, **dadurch gekennzeichnet, dass** zumindest der Schenkel (16), der am Stirnseitenabschnitt (18) des ersten Schenkels (2) anliegt, mit einer Umfangsfläche (21) des zweiten Elements einen Leckagepfad bildet.

4. Steckkupplung nach Anspruch 3, **dadurch gekennzeichnet, dass** beide Schenkel (16, 17) mit der Umfangsfläche (21) des zweiten Elements (2) einen Leckagepfad bilden.

5. Steckkupplung nach Anspruch 4, **dadurch gekennzeichnet, dass** die Schenkel (16, 17) mit ihren radialen Innenseiten einen vorbestimmten Abstand (20) zur Umfangsfläche (21) einhalten.

6. Steckkupplung nach einem der Ansprüche 2 bis 5, **dadurch gekennzeichnet, dass** mindestens ein Schenkel (16, 17) eine seinem Stirnseitenabschnitt (18, 19) zugewandte Außenseite mit einer Form aufweist, die der Form des Stirnseitenabschnitts (18, 19) entspricht.

7. Steckkupplung nach einem der Ansprüche 2 bis 6, **dadurch gekennzeichnet, dass** mindestens ein Schenkel (16, 17) eine im Wesentlichen gleichbleibende Dicke aufweist.

8. Steckkupplung nach einem der Ansprüche 2 bis 7, **dadurch gekennzeichnet, dass** beide Schenkel (16, 17) von einem gemeinsamen Basisbereich ausgehen.

9. Steckkupplung nach einem der Ansprüche 2 bis 8, **dadurch gekennzeichnet, dass** mindestens ein Schenkel (16, 17) gewölbt ist.

10. Steckkupplung nach einem der Ansprüche 1 bis 9, **dadurch gekennzeichnet, dass** die Halteeinrichtung (6) vom ersten Element (2) und vom zweiten Element (4) getrennt ausgebildet ist.

11. Steckkupplung nach einem der Ansprüche 1 bis 10, **dadurch gekennzeichnet, dass** die Dichtung (10) stoffflüssig mit der Halteeinrichtung (6) verbunden ist.

12. Steckkupplung nach einem der Ansprüche 1 bis 10, **dadurch gekennzeichnet, dass** die Dichtung (10) formschlüssig mit der Halteeinrichtung (6) verbunden ist.

13. Steckkupplung nach einem der Ansprüche 1 bis 12, **dadurch gekennzeichnet, dass** die Dichtung (10) einen Dichtungsfuß (11) aufweist, der das erste Element (2) und das zweite Element (4) umgibt.

14. Steckkupplung nach Anspruch 13, **dadurch gekennzeichnet, dass** zwischen der Dichtung (10) und dem Dichtungsfuß (11) ein Steg (12) angeordnet ist, der einen Abstand (13) zu mindestens einem Stirnseitenabschnitt (18, 19) aufweist.
